# FASCICULE DE BREVET EUROPEEN

(11) **EP 1 919 746 B1**
(45) Date de publication et mention de la délivrance du brevet: **24.11.2010**
(21) Numéro de dépôt: 06762853.7
(22) Date de dépôt: 27.07.2006
(51) Int. Cl.: B60S 1/38

(54) **BALAI D'ESSUIE-GLACE COMPORTANT UNE MONTURE DE SUPPORT EN DEUX PARTIES**
EINEN ZWEITEILIGEN STÜTZHALTER UMFASSENDES WINDSCHUTZSCHEIBENWISCHERBLATT
WINDSHIELD WIPER BLADE COMPRISING A TWO-PART SUPPORT MOUNT

(30) Priorité: 29.08.2005 FR 0508806
(43) Date de publication de la demande: 14.05.2008
(73) Titulaire: VALEO SYSTEMES D'ESSUYAGE, 78321 Le Mesnil Saint Denis Cedex (FR)
(72) Inventeur: THIENARD, Jean-Claude, F-76200 Dieppe (FR)
(74) Mandataire: Rosolen-Delarue, Katell
(86) Numéro de dépôt international: PCT/EP2006/007427
(87) Numéro de publication internationale: WO 2007/025614

(56) Documents cités:
- EP-A- 1 541 433
- WO-A-00/48876
- DE-A1- 19 801 058
- FR-A- 2 871 127
- GB-A- 1 489 791

## Description

L'invention propose un balai d'essuie-glace de type "flat blade" comportant une monture de support tubulaire et un élément de liaison du balai à un bras d'entraînement.

L'invention propose plus particulièrement un balai d'essuie-glace d'orientation principale longitudinale comportant un élément de liaison du balai avec un bras d'entraînement, une monture de support longitudinale, qui est réalisée en deux tronçons longitudinaux , qui est montée sous l'élément de liaison et qui comporte un corps supérieur tubulaire d'axe principal longitudinal et des moyens inférieurs de support d'une raclette d'essuyage, et un élément structurel en forme de lame longitudinale, qui est reçu à l'intérieur du corps tubulaire de la monture de support.

Selon une conception consistant à réaliser des balais d'essuie-glace de faible hauteur, la structure articulée du balai d'essuie-glace, qui porte la raclette ou lame d'essuyage est supprimée, et c'est l'association d'une monture de support creuse avec une vertèbre longitudinale de rigidification qui constitue la structure du balai proprement dit.

La monture de support est en forme de tronçon de profilé longitudinal qui comporte un corps tubulaire supérieur à l'intérieur duquel la vertèbre, qui est en forme de lame horizontale longitudinale est reçue. La monture comporte enfin des crochets inférieurs de montage de la raclette d'essuyage.

La vertèbre est réalisée en un matériau élastique, pour permettre de plaquer la raclette d'essuyage contre la surface vitrée à essuyer.

Le balai comporte aussi un élément de liaison du balai avec un bras d'entraînement en balayage, sous lequel est montée la monture de support.

Selon un mode de réalisation connu (voir le document DE 19801058 A1), la monture de support est réalisée en deux parties longitudinales qui sont agencées longitudinalement de part et d'autre d'une partie centrale réalisée venue de matière avec l'élément de liaison, qui délimite en partie le corps tubulaire et qui comporte des crochets de montage de la raclette.

L'invention a pour but de proposer un autre mode de réalisation de la monture de support.

Dans ce but, l'invention propose un balai d'essuie-glace tel que décrit précédemment, **caractérisé en ce que** les deux tronçons longitudinaux la monture de support sont agencés longitudinalement dans le prolongement l'un de l'autre et en ce que les extrémités longitudinales internes en vis-à-vis des tronçons longitudinaux sont jointives et sont solidarisées entre elles par l'intermédiaire de l'élément de liaison.

Selon d'autres caractéristiques de l'invention :
- l'élément de liaison comporte deux pattes inférieures qui délimitent un logement longitudinal dans lequel l'extrémité longitudinale interne de chaque tronçon longitudinal est montée selon un mouvement globalement longitudinal ;
- le corps tubulaire est délimité vers le haut par une paroi supérieure de chaque tronçon longitudinal, et la paroi supérieure de chaque tronçon longitudinal comporte un orifice qui reçoit un ergot inférieur associé de l'élément de liaison ;
- la paroi supérieure est apte se déformer élastiquement vers le bas lors du montage de l'extrémité longitudinale interne du tronçon longitudinal sous l'élément de liaison, pour permettre l'introduction de l'ergot associé dans l'orifice de la paroi supérieure ;
- l'élément structurel est apte à réaliser le verrouillage de l'extrémité longitudinale interne de chaque tronçon longitudinal en position montée l'élément structurel est monté dans le corps tubulaire postérieurement au montage de l'extrémité longitudinale interne de chaque tronçon longitudinal sous l'élément de liaison et l'élément structurel est apte à empêcher toute déformation

élastique de la paroi supérieure, pour réaliser le verrouillage de l'extrémité longitudinale interne du tronçon longitudinal en position montée sous l'élément de liaison.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un balai d'essuie-glace conforme à l'invention ;
- la figure 2 est une vue en perspective éclatée du balai représenté à la figure 1 ;
- la figure 3 est une vue en perspective de dessous du balai représenté à la figure 2, montrant les ergots de l'élément de liaison ;
- la figure 4 est une section du balai représenté à la figure 1 , suivant un plan longitudinal vertical.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

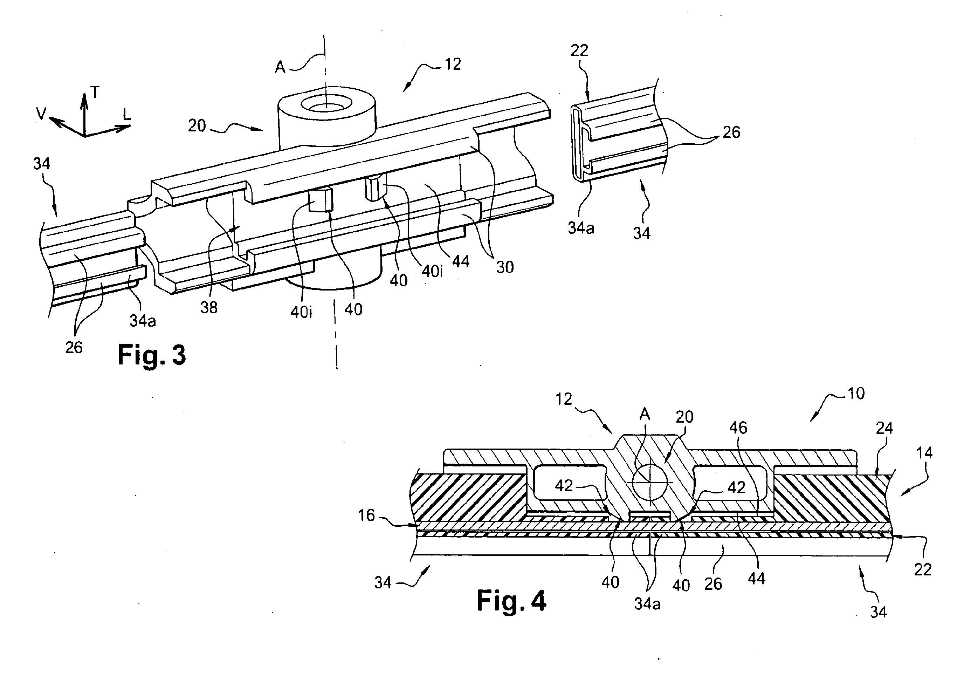

On a représenté aux figures un balai d'essuie-glace 10 de type "flat-blade" qui comporte un élément de liaison 12 du balai 10 à un bras d'entraînement (non représenté), une monture de support 14 qui est montée sous l'élément de liaison 12, une vertèbre 16 (figure 4) et une raclette inférieure 18.

La monture de support 14 comporte un corps central tubulaire 22 d'axe principal longitudinal, qui reçoit la vertèbre 16.

La monture de support 14 comporte aussi des moyens inférieurs de montage de la raclette d'essuyage, qui consistent ici en deux crochets inférieurs longitudinaux 26 en vis-à-vis, qui délimitent un logement longitudinal ouvert vers le bas, dans lequel un dos supérieur complémentaire de la raclette 18 est monté.

Enfin, la monture 14 comporte une nervure supérieure longitudinale 24 qui s'étend verticalement vers le haut depuis le corps central 22, et qui est conformée aérodynamiquement de manière à générer des efforts d'appui du balai 10 sur la surface vitrée, sous l'action du vent relatif produit par le déplacement du véhicule.

La vertèbre 16 constitue l'élément structurel du balai 10, qui rigidifie la monture 14. La vertèbre 16 est réalisée en un matériau relativement rigide, par exemple en acier, et elle consiste en une lame horizontale longitudinale qui est agencée à l'intérieur du corps tubulaire 22.

L'élément de liaison 12 est agencé longitudinalement globalement au milieu de la monture 14, il comporte, dans sa partie supérieure, des moyens 20 de liaison avec le bras d'entraînement, qui permettent notamment d'articuler le balai 10 par rapport au bras autour d'un axe A transversal.

L'élément de liaison 12 comporte dans sa partie inférieure des crochets inférieurs longitudinaux 30 qui sont répartis de part et d'autre du corps 22 de la monture de support 14, de manière que l'élément de liaison 12 chevauche le corps 22 de la monture 14.

La nervure supérieure 24 comporte une ouverture 32 au travers de laquelle l'élément de liaison 12 est monté sur la monture 14.

Comme on peut le voir aux figures, la monture de support 14 est formée en deux tronçons longitudinaux 34 qui sont agencés longitudinalement dans le prolongement l'un de l'autre, et dont les extrémités longitudinales internes 34a en vis-à-vis des deux tronçons 34 sont jointives (figure 4), c'est-à-dire que leurs faces verticales transversales en vis-à-vis sont en appui longitudinalement l'une contre l'autre.

Ainsi, chaque tronçon longitudinal 34 comporte une partie du corps tubulaire 22 recevant la vertèbre 16, et une partie de chaque crochet 26 recevant le dos de la raclette 18.

De plus, les extrémités longitudinales internes 34a des tronçons longitudinaux 34 sont solidarisées l'une à l'autre par l'intermédiaire de l'élément de liaison 12.

Comme on peut le voir plus en détails à la figure 3, les crochets inférieurs 30 de l'élément de liaison 12 délimitent un logement longitudinal 38 qui est débouchant à ses deux extrémités longitudinales, de sorte que l'extrémité interne 34a de chaque tronçon longitudinal 34 est montée sous l'élément de liaison 12 selon un mouvement de translation longitudinale au travers de l'ouverture associée du logement longitudinal 38.

L'élément de liaison 12 comporte aussi des moyens pour le maintien de l'extrémité interne 34a de chaque tronçon longitudinal 34 dans le logement longitudinal 38, consistant en un ergot 40 qui est porté par l'élément de liaison, et qui est reçu dans une ouverture associée 42 de l'extrémité interne 34a associée d'un tronçon longitudinal 34.

Comme on peut le voir à la figure 3, chaque ergot 40 fait saillie vers le bas par rapport à une face horizontale inférieure 44 de l'élément de liaison 12, cette face horizontale 44 délimitant la partie supérieure du logement longitudinal 38.

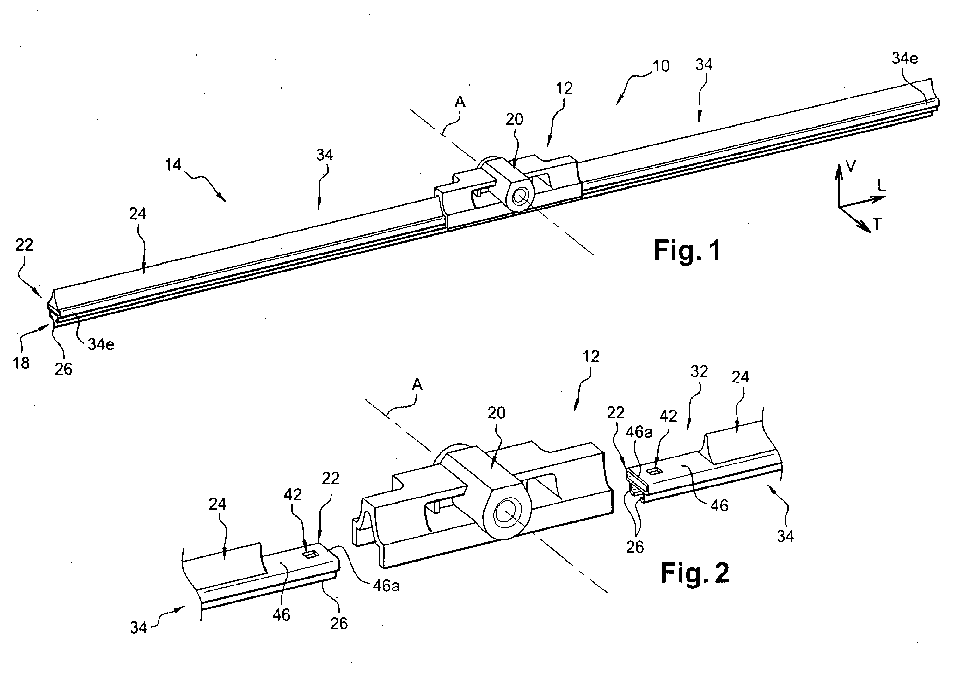

Comme on peut le voir à la figure 2, l'ouverture 42 de l'extrémité interne 34a de chaque tronçon longitudinal 34 est réalisée dans une paroi supérieure horizontale 46 du tronçon longitudinal 34 qui forme la partie supérieure du corps 22 du tronçon longitudinal 34, et qui est agencée verticalement entre la vertèbre 16 et la nervure supérieure 24 ou la face inférieure 44 de l'élément de liaison 12.

Dans le mode de réalisation représenté à la figure 2, la largeur de l'ouverture 42 est inférieure à la largeur de la paroi supérieure horizontale 46.

Selon une variante de réalisation non représentée, la l'ouverture 42 s'étend transversalement sur toute la largeur de la paroi supérieure 46, c'est-à-dire que l'ouverture 42 coupe la paroi supérieure 46 en deux portions longitudinales.

Comme on l'a dit plus haut, l'extrémité interne 34a de chaque tronçon longitudinal 34 est introduite dans le logement longitudinal 38 de l'élément de liaison 12, selon un mouvement de translation longitudinale.

L'extrémité longitudinale interne 46a de la paroi supérieure 46 est apte à se déformer élastiquement vers le bas, c'est-à-dire à l'intérieur du corps tubulaire 22 lors de l'introduction de l'extrémité interne 34a du tronçon longitudinal 34 associé, et cette déformation de l'extrémité interne 46a de la paroi supérieure 46 est provoquée par l'ergot 40 associé.

Chaque ergot 40 comporte à cet effet une portion inférieure 40i en forme de rampe sur laquelle l'extrémité interne 46a de la paroi supérieure 46 est apte à s'appuyer vers le haut, pour faciliter la déformation de l'extrémité interne 46a de la paroi supérieure 46.

Cette déformation de l'extrémité interne 46a de la paroi supérieure 46 facilite l'introduction de l'extrémité interne 34a de chaque tronçon longitudinal 34 dans le logement longitudinal 38, jusqu'à ce que l'ouverture 42 de l'extrémité interne 46a de la paroi supérieure 46 soit située au niveau de l'ergot 40 associé. L'ergot 40 pénètre alors dans l'ouverture 42, et la paroi supérieure 46 reprend élastiquement sa forme plane initiale. L'extrémité interne 34a du tronçon longitudinal 34 est alors en position montée sous l'élément de liaison 12.

Selon un mode de réalisation préféré, la vertèbre 16 est montée dans le corps tubulaire 22 postérieurement au montage des deux tronçons 34 sous l'élément de liaison 12. De plus, la vertèbre 16 est conformée de manière que lorsqu'elle est en position montée dans le corps tubulaire 22, elle s'appuie vers le haut contre une face inférieure en vis-à-vis de la paroi supérieure 46 de chaque tronçon longitudinal 34.

Ainsi, la vertèbre 16 empêche l'extrémité interne 46a de la paroi supérieure 46 de se déformer vers le bas sous l'action de l'ergot 40 associé. La vertèbre 16 réalise par conséquent un verrouillage de l'extrémité interne 46a de la paroi supérieure 46 en position montée sous l'élément de liaison 12.

Le balai 10 comporte aussi des moyens non représentés pour le verrouillage longitudinal de la vertèbre 16 en position montée dans le corps tubulaire 22, qui sont de préférence agencés au niveau de l'extrémité longitudinale externe 34e de chaque tronçon longitudinal 34.

## Revendications

1. Balai d'essuie-glace (10) d'orientation principale longitudinale comportant :
- un élément de liaison (12) du balai (10) avec un bras d'entraînement ;
- une monture (14) de support longitudinale, qui est réalisée en deux tronçons longitudinaux (34), qui est montée sous l'élément de liaison (12) et qui comporte un corps (22) supérieur tubulaire d'axe principal longitudinal et des moyens inférieurs (26) de support d'une raclette d'essuyage (18) ; et
- un élément structurel (16) en forme de lame longitudinale, qui est reçu à l'intérieur du corps (22) tubulaire de la monture de support (14), les tronçons (34) de la monture (14) étant agencés longitudinalement dans le prolongement l'un de l'autre de telle sorte que les extrémités longitudinales internes (34a) sont jointives et solidarisées entre elles
**caractérisé en ce que** la solidarisation des extrémités des tronçons longitudinaux (34) de la monture est réalisée par l'intermédiaire de l'élément de liaison (12).

2. Balai (10) selon la revendication précédente, **caractérisé en ce que** l'élément de liaison (12) comporte deux pattes inférieures (30) qui délimitent un logement longitudinal dans lequel l'extrémité longitudinale interne (34a) de chaque tronçon longitudinal (34) est montée selon un mouvement globalement longitudinal.

3. Balai (10) selon l'une quelconque des revendications précédentes, dans lequel ie corps (22) tubulaire est délimité vers le haut par une paroi supérieure (46) de chaque tronçon longitudinal (34),
**caractérisé en ce que** la paroi supérieure (46) de chaque tronçon longitudinal (34) comporte un orifice (42) qui reçoit un ergot inférieur (40) associé de l'élément de liaison (12).

4. Balai (10) selon la revendication précédente, **caractérisé en ce que** la paroi supérieure (46) est apte se déformer élastiquement vers le bas lors du montage de l'extrémité longitudinale interne (34a) du tronçon longitudinal (34) sous l'élément de liaison (12), pour permettre l'introduction de l'ergot (40) associé dans l'orifice (42) de la paroi supérieure (46).

5. Balai (10) selon l'une quelconque des revendications précédentes, **caractérisé en ce que** l'élément structurel (16) est apte à réaliser le verrouillage de l'extrémité longitudinale interne (34a) de chaque tronçon longitudinal (34) en position montée sous l'élément de liaison (12).

6. Balai (10) selon la revendication précédente, en combinaison avec la revendication 4, **caractérisé en ce que** l'élément structurel (16) est monté dans le corps (22) tubulaire postérieurement au montage de l'extrémité longitudinale interne (34a) de chaque tronçon longitudinal (34) sous l'élément de liaison (12) et **en ce que** l'élément structurel (16) est apte à empêcher toute déformation élastique de la paroi supérieure (46), pour réaliser le verrouillage de l'extrémité longitudinale interne (34a) du tronçon longitudinal (34) en position montée sous l'élément de liaison (12).

## Claims

1. A windscreen wiper (10) having a main longitudinal orientation including:
- an element (12) linking the windscreen wiper (10) to a driving arm;
- a longitudinal support main bow (14) which is made of two longitudinal segments (34), which is mounted under the linking element (12) and which includes an upper tubular body (22) having a longitudinal main axis and lower means (26) supporting a wiping blade (18); and
- a structural element (16) having the shape of a longitudinal blade, which is received inside a tubular body (22) of the support main bow (14), with the segments (34) of the main bow (14) being arranged longitudinally in alignment with either one, so that the internal longitudinal end (34a) are assembled together and made integral with each other;
**characterized in that** the assembling of the ends of the longitudinal segments (34) of the main bow is provided by the linking element (12).

2. A windscreen wiper (10) according to the preceding claim, **characterised in that** the linking element (12) includes two lower lugs (30) which limit a longitudinal recess wherein the internal longitudinal end (34a) of each longitudinal segment (34) is mounted according to a globally longitudinal motion.

3. A windscreen wiper (10) according to any one of the preceding claims, wherein the tubular body (22) is limited upwards by an upper wall (46) of each longitudinal segment (34),
**characterised in that** the upper wall (46) of each longitudinal segment (34) includes an orifice (42) which receives an associated lower pin (40) of the linking element (12).

4. A windscreen wiper (10) according to the preceding claim, **characterised in that** the upper wall (46) is able to elastically deform downward when mounting the internal longitudinal end (34a) of the longitudinal segment (34) under the linking element (12) in order to enable the introduction of the associated pin (40) into the orifice (42) of the upper wall (46).

5. A windscreen wiper (10) according to any one of the preceding claims, **characterised in that** the structural element (16) is able to provide the locking of the internal longitudinal end (34a) of each longitudinal segment (34) when mounted under the linking element (12).

6. A windscreen wiper (10) according to the preceding claim, combined with claim 4, **characterised in that** the structural element (16) is mounted in the tubular body (22) after mounting the internal longitudinal end (34a) of each longitudinal segment (34) under the linking element (12) and **in that** the structural element (16) is able to prevent any elastic deformation of the upper wall (46), to provide the locking of the internal longitudinal end (34a) of the longitudinal segment (34) when mounted under the linking element (12).

## Patentansprüche

1. Scheibenwischerblatt (10) mit hauptsächlicher Längsausrichtung, das folgende Teile umfaßt:
- ein Verbindungselement (12) des Wischerblatts (10) mit einem Antriebsarm;
- einen Längsstützrahmen (14), der in zwei Längsabschnitten (34) ausgeführt ist, der unter das Verbindungselement (12) montiert ist, und der einen höheren röhrenförmigen Körper (22) mit Hauptlängsache und untere Stützmittel (26) eines Wischergummis (18) umfaßt;
- ein Strukturelement (16) in Form eines Längsblatts, das im Innern des röhrenförmigen Körpers (22) des Stützrahmens (14) aufgenommen wird, wobei die Abschnitte (34) des Rahmens (14) in der Verlängerung des einen des anderen so gestaltet sind, daß die inneren Längsenden (34a) aneinander anstoßen und fest miteinander verbunden sind,
**dadurch gekennzeichnet, daß** die feste Verbindung der Enden der Längsabschnitte (34) des Rahmens vermittels des Verbindungselements (12) realisiert wird.

2. Wischerblatt (10) nach vorstehendem Anspruch, **dadurch gekennzeichnet, daß** das Verbindungselement (12) zwei untere Laschen (30) umfaßt, die eine Längsaufnahme abgrenzen, in der das innere Längsende (34a) jedes Längsabschnitts (34) nach einer insgesamten Längsbewegung montiert ist.

3. Wischerblatt (10) nach einem beliebigen der vorstehenden Ansprüche, bei dem der röhrenförmige Körper (22) durch eine obere Wand (46) jedes Längsabschnitts (34) nach oben abgegrenzt ist,
**dadurch gekennzeichnet, daß** die obere Wand (46) jedes Längsabschnitts (34) eine Öffnung (42) umfaßt, die einen unteren Nocken (40) aufnimmt, der dem Verbindungselement (12) zugeordnet ist.

4. Wischerblatt (10) nach vorstehendem Anspruch, **dadurch gekennzeichnet, daß** die obere Wand (46) dazu geeignet ist, sich bei der Montage des inneren Längsendes (34a) des Längsabschnitts (34) unter das Verbindungselement (12) elastisch nach unten zu verformen, um den Eintritt des zugeordneten Nockens (40) in die Öffnung (42) der oberen Wand (46) zu ermöglichen.

5. Wischerblatt (10) nach einem beliebigen der vorstehenden Ansprüche, **dadurch gekennzeichnet, daß** das Strukturelement (16) dazu geeignet ist, die Verriegelung des inneren Längsendes (34a) jedes Längsabschnitts (34) in unter das Verbindungselement (12) montierter Position herzustellen.

6. Wischerblatt (10) nach vorstehendem Anspruch in Verbindung mit Anspruch 4, **dadurch gekennzeichnet, daß** das Strukturelement (16) nach der Montage des inneren Längsendes (34a) jedes Längsabschnitts (34) unter das Verbindungselement (12) in den röhrenförmigen Körper (22) montiert wird, und **dadurch**, daß das Strukturelement (16) dazu geeignet ist, jegliche elastische Verformung der oberen Wand (46) zu verhindern, um die Verriegelung des inneren Längsendes (34a) des Längsabschnitts (34) in unter das Verbindungselement (12) montierter Position herzustellen.
